# EUROPEAN PATENT APPLICATION

(11) **EP 0 992 704 A2**
(43) Date of publication of application: **12.04.2000**
(21) Application number: 99307940.9
(22) Date of filing: 08.10.1999
(51) Int. Cl.: F16F 9/06, F16F 13/10, B29C 45/82

(54) **Hydraulic dampener**

(30) Priority: 09.10.1998 US 168679
(71) Applicant: HUSKY INJECTION MOLDING SYSTEMS LTD., Bolton Ontario L7E 5S5 (CA)
(72) Inventor: Glaesener, Pierre, Bissen, Luxembourg L-7780 (LU)
(74) Representative: Davies, Gregory Mark

(57) **Abstract**

An apparatus and method for damping vibrations and reducing noise produced by an injection molding machine includes structure and steps for providing a resilient member (60) that absorbs and dissipates vibration energy produced by the hydraulic fluid pump (20) of the injection molding machine. The resilient member (60) can be a flexible diaphragm or a spring-mounted plate or any compressible material, and may be placed adjacent to a fluid cushion (70) that further dissipates the vibration energy. The resilient member (60) is placed within a hydraulic fluid line (30) leading from a fluid storage tank (40) to the hydraulic fluid pump (20). The apparatus may be used in a method for reducing vibration and noise in an injection molding machine (10), or in any other device where noise is generated by a hydraulic pump having suction lines that transmit noise to an oil supply tank.

## Description

### Technical Field of the Invention

This invention relates generally to an apparatus for damping vibrations in an injection molding machine, and more specifically to the use of a resilient member to absorb and dissipate vibration energy. This invention further relates to a method of using such an apparatus to damp vibrations in a hydraulic injection molding machine.

### Background of the Invention

Injection molding machines cause a great deal of noise and vibration due to the vibration energy produced, inter alia, by the hydraulic fluid pump used to drive the hydraulic actuators in the machine. This vibration energy is typically transmitted from the pump through the hydraulic fluid supply line coming from the hydraulic fluid storage tank. Energy is also transmitted through the pressure line of the injection molding machine, where dampers have been used to reduce the level of noise and vibration in pressure lines. The tank can act like a drum for the vibration energy, resulting in greatly increased levels of noise and vibration during injection molding operations. This results in an undesirable working environment in areas employing the use of such machines, and leads to personnel complaints and consequent expenditures to reduce the noise.

Traditional injection molding machines do not utilize a vibration damping mechanism to decrease such noise and vibration in suction lines, although vibration damping devices have been utilized in other fluid art areas, e.g. pressure dampers.

An example of such a vibration damping device is found in U.S. Patent No. 5,429,343 to Maeno et al. This patent describes an engine-mount vibration damping device in which rubber is injection molded into the upper half of a cylindrical insert plate to form a damping member. The rubber material has an inner tube formed within it, and a concave surface is formed on the rubber member which provides a fluid compartment. This device of the patent is mounted outside an engine and is not adapted for use in a fluid flow channel.

Another vibration damping device is described in U.S. Patent Nos. 5,477,946, 5,489,009, and U.S. Patent No. 5,366,048. These patents describe an automobile suspension system vibration damping device that consists of two cylindrical, flexible membranes connected to a piston, which are filled with liquid. Again, these devices are mounted outside the vibration producing member and are not adapted for use in an injection molding machine.

Consequently, although there have been attempts in other fields of art to produce an apparatus capable of damping vibrations in various settings, there has been no attempt to provide an apparatus and method for damping vibrations in a hydraulic fluid flow channel of an injection molding machine. This need is general for all suction lines. A need therefore exists in the art for such an apparatus and method to reduce the level of noise and vibration produced by an injection molding apparatus.

### Objects of the Invention

An object of the present invention is to provide apparatus and method for overcoming the problems discussed above, by substantially damping the vibration and noise propagating through the oil flowing from the hydraulic fluid pump to the fluid storage tank of an injection molding machine.

According to a first aspect of the present invention, an apparatus for damping vibrations in an injection molding machine hydraulic fluid line comprises a resilient member in the line for absorbing vibration energy. This resilient member is oriented substantially orthogonal to the direction of vibration energy propagation in the line, and does not impede the flow of fluid in the line.

According to a second aspect of the present invention, an apparatus for damping vibrations in an injection molding machine hydraulic fluid flow channel, includes a resilient member for absorbing vibration energy and an adjacent cushion. The resilient member is oriented substantially orthogonal to the direction of vibration energy propagating in the line, and does not impede the flow of fluid in the line. The adjacent cushion absorbs additional vibration energy.

In another aspect of the present invention, an apparatus for damping vibrations in a hydraulic line of an injection molding machine that has a hydraulic fluid supply engine connected to a hydraulic line that leads to a source of hydraulic fluid comprises a resilient means that is oriented in the hydraulic line such that it substantially dissipates the vibration energy without impeding fluid flow in the hydraulic line. The resilient means is located in a fitting having an angle therein for connecting the hydraulic fluid supply engine to the hydraulic line leading from the hydraulic fluid source.

According to another aspect of the present invention, an apparatus for damping vibrations in a hydraulic fluid system having a hydraulic fluid pump, a hydraulic fluid tank, and a hydraulic fluid line, where an angled fitting coupling the hydraulic fluid line, leading from the hydraulic fluid tank, to the hydraulic fluid pump comprises a resilient member in the fitting oriented in a direction angled with respect to a direction of vibration energy propagation from the fluid pump. The resilient member is disposed so as to not unnecessarily impede the flow of fluid through the fitting. The movement of the resilient means dissipates the vibration energy propagating from the fluid pump.

According to yet another aspect of the present invention, a method of damping vibrations in an injection molding apparatus hydraulic fluid line includes the step of placing a resilient means in the line to absorb vibration energy. The resilient means is oriented in a direction that is substantially orthogonal to a direction of vibration energy propagation, but does not impede the flow of fluid in the line, and the vibration energy is dissipated by the movement of the resilient means.

In a further aspect of the present invention, a method for damping vibrations in an injection molding machine having a hydraulic fluid supply engine, a hydraulic fluid supply line, and a source of hydraulic fluid includes the step of providing an angled fitting therein for connecting the hydraulic fluid supply engine to the hydraulic fluid line leading from the hydraulic fluid source. A resilient member is disposed inside the fitting, and is oriented so as to substantially dissipate the vibration energy propagating from the hydraulic fluid supply engine, and is outside of the fluid flow path through the fitting.

Yet another aspect of the present invention is to provide a hydraulic injection molding machine which exhibits a decreased level of vibration and noise. The injection molding machine has a fluid pump that produces vibrational energy, a hydraulic line connected to the fluid pump that propagates the vibrational energy, a T-shaped fitting coupling the line to a source of hydraulic fluid, and a resilient vibration damping device disposed inside the fitting outside of the path of fluid flow from the hydraulic line to the pump so as not to impede fluid flow. The vibration damping device is oriented substantially orthogonal to the path of fluid flow, and the movement of the vibration damping device dissipates the vibration energy.

### Brief Description of the Drawings

The present invention is better understood with the aid of the accompanying drawings.
Figure 1 is a schematic of a hydraulic injection molding machine, utilizing the apparatus of the present invention to reduce vibration and noise.
Figure 2 is an detailed view of the apparatus of the present invention, showing the movement of the flexible diaphragm and depicting the direction of fluid flow and the direction of vibration energy propagation.
Figure 3 shows an alternative embodiment of the present invention, which utilizes a spring mounted plate as a resilient member.
Figure 4 shows another alternative embodiment of the present invention, in which the resilient member is adjacent to the path of fluid flow, and is not orthogonal to the direction of energy propagation.
Figure 5 shows yet another alternative embodiment of the present invention, in which the resilient member is adjacent to the path of fluid flow, and is orthogonal to the direction of energy propagation.
Figure 6 shows another alternative embodiment of the present invention, in which two or more resilient members are adjacent to the path of fluid flow, and are not orthogonal to the direction of energy propagation such that the remaining energy which is reflected from the first diaphragm hits the second diaphragm and is reflected back onto the first diaphragm.
Figure 7 shows another alternative embodiment of the present invention, in which a compressible material is held in place by a screen.
Figure 8 shows another alternative embodiment of the present invention, in which a damper is integrated into the suction compartment of the pump.

### Detailed Description of the Invention

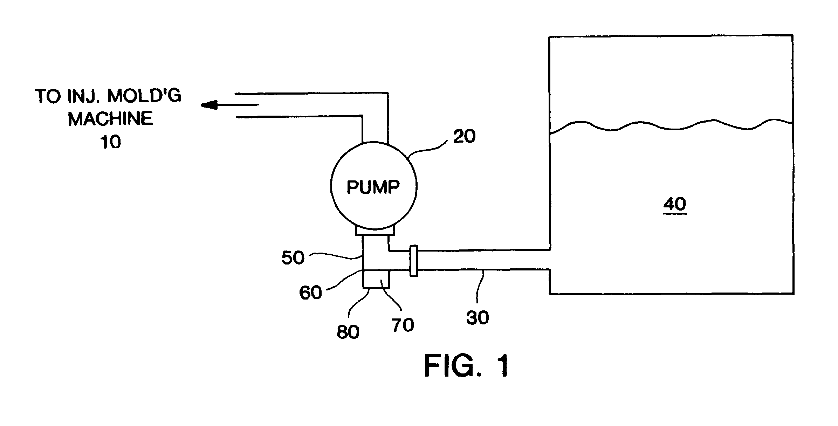

Referring now to the drawings in detail, wherein like numerals indicate the same elements throughout the views, Figure 1 shows a hydraulic injection molding machine 10 that includes a hydraulic fluid pump (or engine) 20, which produces noise and vibration when pumping hydraulic fluid to the various hydraulic actuators (not shown) in the machine 10. The pump 20 is connected to a source of hydraulic fluid 40 (such as a fluid storage tank) by a hydraulic fluid line 30. During operation of the pump 20, the vibration and pressure pulsation noise travels through the hydraulic fluid line 30 to the fluid tank 40, where it is amplified, producing unacceptable levels of noise and vibration. According to one embodiment of the present invention, a resilient diaphragm 60 is placed in the hydraulic fluid line 30 outside the path of fluid flow so as not to impede the flow of hydraulic fluid from the fluid tank 40 to the pump 20, but so that it may substantially absorb the vibration energy produced by the pump, preventing the vibration from traveling up the line 30. The diaphragm 60 is preferably oriented in a direction orthogonal to the source of noise, and as close as possible to the source of noise.

The diaphragm 60 is preferably made of rubber, although any flexible material, e.g. latex, plastic, leather, a very thin metallic sheet, etc. could be used. The diameter of the diaphragm depends on the diameter of the line or fitting, and the diameter of the diaphragm can be larger than the pipe diameter. The diaphragm 60 may be placed adjacent to a fluid cushion 70 that acts to further absorb vibration energy. The fluid cushion 70, which is preferably compressible, may be disposed between an end cap 80 and the diaphragm 60.

According to the embodiment shown in Figure 1, it is convenient to utilize a T-shaped fitting 50 to allow the diaphragm 60 to be oriented outside of the path of fluid flow but still be located in such a way that vibration is absorbed by the resilient member. The T-shaped fitting 50 enables the diaphragm 60 to be positioned in an orientation substantially orthogonal to the direction of vibration energy propagation to absorb the maximum amount of energy. The diaphragm 60 may be placed a varying distance away from the path of fluid flow, depending on the pressure and flow to the pump, the vibrational resonance of the pump, the fluid, etc.

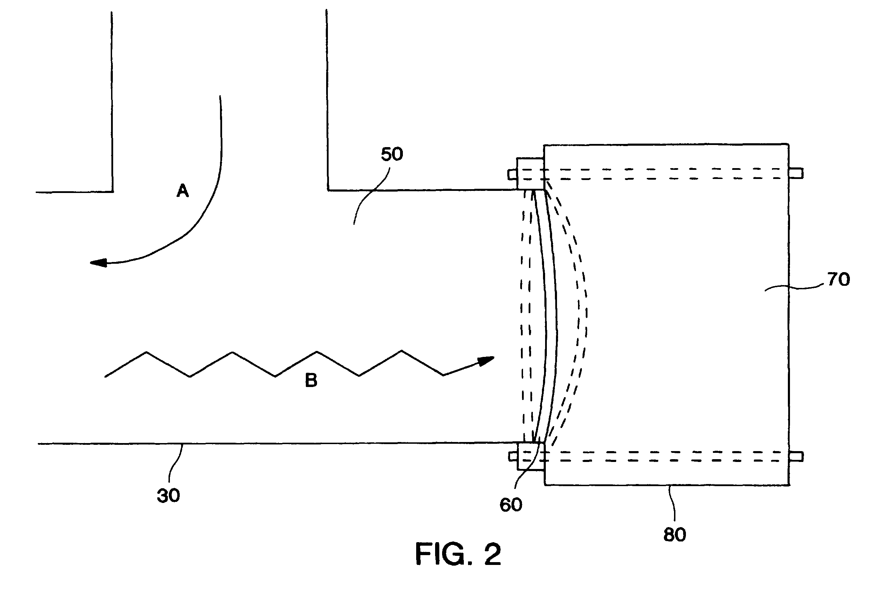

Figure 2 presents a more detailed view of the apparatus of Figure 1. The direction of fluid flow is indicated by the arrow A, and the direction of vibration energy propagation is indicated by the arrow B. The diaphragm 60, moves back and forth in response to the vibration energy impacting thereon, substantially damping the positive and negative vibration energy pressure waves propagating from the pump 20. The diaphragm 60 is preferably disposed in an orientation substantially orthogonal to the direction of vibration energy propagation in an end of the T-shaped fitting that is fluid filled but out of the fluid flow path A. An end cap 80 may be bolted to the end of the T-shaped fitting 50 and may contain a compressible and energy absorbing material that further absorbs and dissipates the vibration energy. It should be noted that the cushion 70 contained in the end cap may be any of vented air, pressurized air, inert gas, liquid, foam, or any other substance that behaves as a damper when subjected to vibration energy. A screen (not shown) may be added as reinforcement to the diaphragm or it may hold a compressible material without a diaphragm.

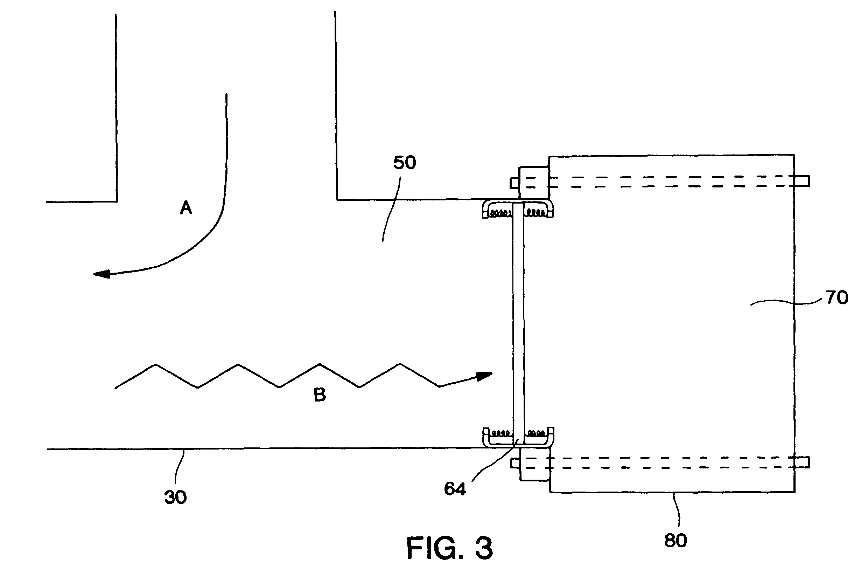

Figure 3 presents another embodiment of the present invention in which the diaphragm 60 has been replaced by a spring-mounted plate 64. The spring-mounted plate 64 is also capable of moving back and forth in response to the vibration energy produced by the engine of the injection molding machine in order to dissipate the vibration energy. Of course, the springs may be mounted in front of and/or behind the plate 64, depending on the installation requirements.

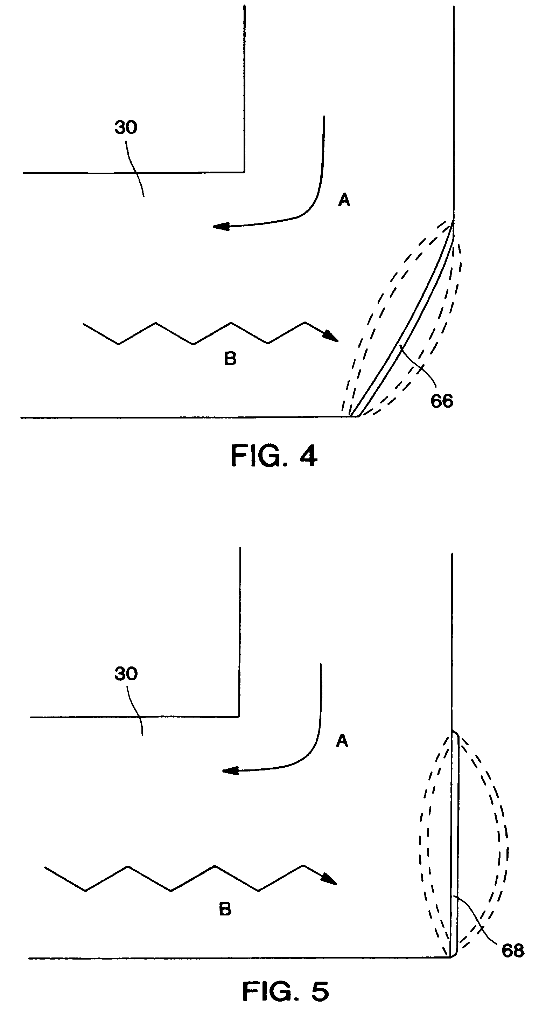

Figure 4 depicts yet another embodiment of the present invention, in which no T-shaped fitting is utilized, and the resilient member 66 (which may be comprise a flexible diaphragm, a spring-mounted plate, or another flexible, energy absorbing device) is positioned in an orientation that is at an angle with respect to the direction of vibration energy propagation. Member 66 is located adjacent to the path of fluid flow A from the tank to the pump but still does not impede the fluid flow. The resilient member 66 may be adjacent to a cushion contained within an end cap, as described above.

Figure 5 presents yet another embodiment of the present invention, in which no T-shaped fitting is utilized. The resilient member 68 may be characterized as a flexible diaphragm, a spring-mounted plate, or some other resilient member. The resilient member 68 is positioned in an orientation substantially orthogonal to the direction of vibration energy propagation, and is adjacent to the path of fluid flow A. The resilient member 68 may be adjacent to a cushion contained within an end cap, as described above. The resilient member 68 may be disc-shaped, rectangular, polygonal, or any shape required by the installation. The member 68 may be flat or curved (a cylindrical curve or a spherical curve), depending on the configuration of the pipe, the type of fluid, and the amount of vibration energy to be absorbed.

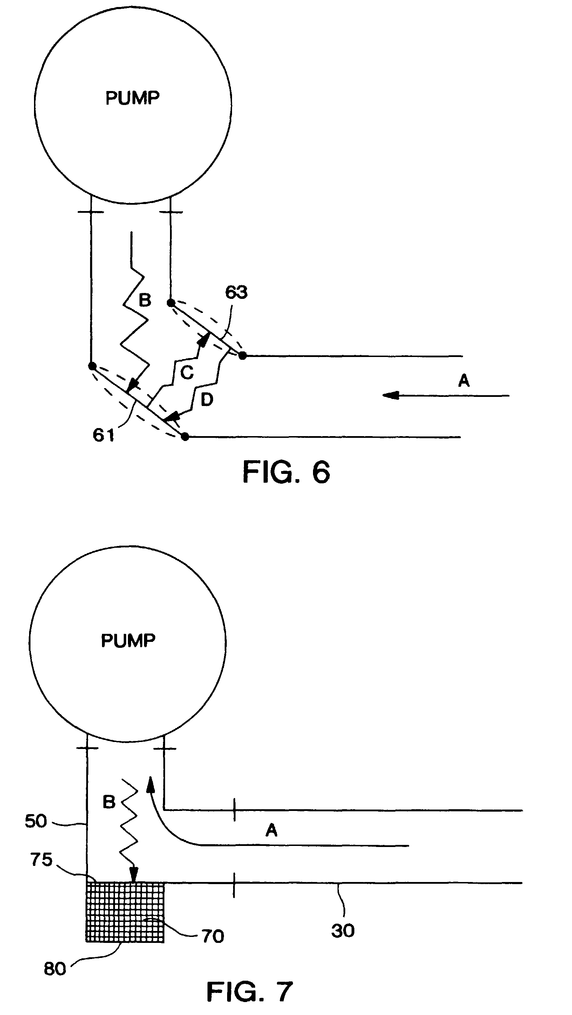

Figure 6 presents another embodiment of the present invention, in which two or more resilient members 61 and 63 are placed adjacent to the path of fluid flow, and are not positioned orthogonal to the direction of vibration propagation. The first diaphragm 61 may be adjacent to a cushion (not shown) and is positioned such that any energy that is not absorbed by the first diaphragm 61 is reflected onto the second diaphragm 63, which may also be adjacent to a cushion (not shown). Remaining energy may again be reflected from the second diaphragm 63 to the first diaphragm 61, such that the vibration energy is substantially absorbed and dissipated.

Figure 7 presents another embodiment of the present invention, in which the cushion 70, which is comprised of a compressible material, is held in place by a screen 75. The screen 75 may be used alone or in conjunction with a diaphragm (not shown).

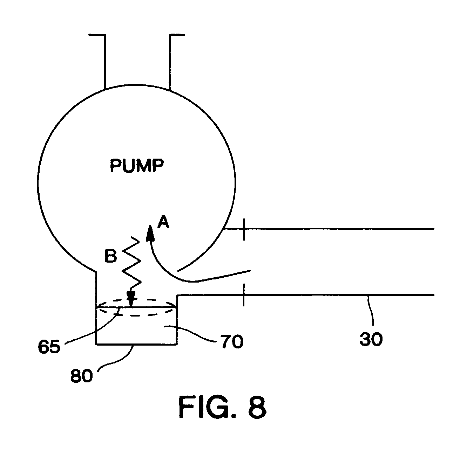

Figure 8 shows an additional embodiment of the present invention, in which the vibration damper 65 is integrated into the suction compartment of the pump.

The apparatus shown in Figures 1-8, and further described above may be utilized in a method of reducing the level of noise and vibration produced by an injection molding machine hydraulic fluid pump.

It should be noted that vibration damping apparatus can be made in accordance with the present invention that are customized for individual injection molding machines of the hydraulic and pneumatic varieties. The size and placement of the vibration damping apparatus can be adjusted to accommodate the type of pump utilized in the injection molding machine, and the level of vibration energy produced, as well as the direction of vibration energy propagating from the particular pump. The damping apparatus of the present invention is very effective in substantially reducing the levels of noise and vibration produced by an engine in a relatively simple and economic manner. It is also foreseeable that the vibration damping apparatus of the present invention may be used or modified for use in other devices in which vibration and noise are problematic.

While the present invention has been described with respect to what are presently considered to be the preferred embodiments, it is to be understood that the invention is not limited to the disclosed embodiments. To the contrary, the invention is intended to cover various modifications and equivalent arrangements included within the scope of the appended claims. The scope of the following claims is to be accorded the broadest interpretation so as to encompass all such m11odifications and equivalent structures and functions.

## Claims

1. Apparatus for damping vibrations in an injection moulding apparatus hydraulic fluid line or fluid flow channel comprising:
a resilient member in the hydraulic fluid line or flow channel for absorbing vibration energy, said resilient member being oriented in a direction substantially orthogonal to a direction of vibration energy propagation, but so as not to impede fluid flow in the line or channel, the vibration energy being dissipated or substantially absorbed by movement of the resilient member.

2. Apparatus according to claim 1, which further comprises a fluid cushion provided on an opposite side of the resilient member from the hydraulic fluid, for absorbing additional vibration energy (the fluid cushion typically comprising a gas, a foam or a liquid such as a compressible liquid).

3. Apparatus according to claim 1 or 2, wherein the resilient member is positioned in the hydraulic fluid line intermediate a hydraulic pump in the injection moulding apparatus and a source of hydraulic fluid.

4. A hydraulic injection moulding machine having a hydraulic fluid supply engine, a hydraulic line, and a source of hydraulic fluid, and apparatus for damping vibrations in the hydraulic line of the hydraulic injection moulding machine that does not impede fluid flow in the hydraulic line, the damping apparatus comprising:
a fitting having an angle therein, for connecting the hydraulic fluid supply engine to the hydraulic line leading from the hydraulic fluid source; and
resilient means for absorbing vibration energy propagating from said hydraulic fluid supply engine, said resilient means being disposed inside said fitting and oriented to substantially dissipate the vibration energy propagating from said hydraulic fluid supply engine, said resilient means being disposed outside of a fluid flow path through said angle.

5. Machine according to claim 4 or apparatus according to any of claims 1 to 3, wherein the resilient means or member comprises a diaphragm (such as a rubber diaphragm) or a spring-mounted plate.

6. Machine according to claim 6 or 7, wherein said fitting comprises a T-shaped fitting with the resilient means being disposed opposite the hydraulic fluid supply engine, said machine optionally further comprising:
an end cap disposed over the end of the T-shaped fitting having the resilient means; and a cushion provided between the resilient means and the end cap (the cushion being typically a gas, a liquid or a foam).

7. Apparatus (typically disposed in an injection moulding machine) for damping vibrations in a hydraulic fluid pump, a hydraulic fluid tank, and a hydraulic fluid line, comprising:
an angled fitting coupling the hydraulic fluid pump to a hydraulic fluid line leading to the hydraulic fluid tank; and
one or more resilient members disposed in said fitting and oriented in a direction angled with respect to a direction of vibration energy propagation from said pump, but so as to not impede fluid flow in the fitting, the vibration energy being dissipated by movement of the resilient member.

8. Apparatus according to claim 7, wherein said fitting comprises a T-shaped fitting, and further comprising:
an end cap disposed over an end of the fitting opposite the pump; and
a cushion provided between the resilient member and the end cap (the cushion being typically a gas, a liquid or a foam).

9. A method for damping vibrations in a hydraulic injection moulding apparatus hydraulic fluid line, comprising the steps of:
providing resilient means in the line for absorbing energy in a direction substantially orthogonal to a direction of vibration energy propagation, but so as not to impede the fluid flow in the line; and
dissipating the vibration energy by movement of the dissipating the vibration energy by movement of the resilient means (the resilient means typically comprising a diaphragm or a spring-mounted plate).

10. A method according to claim 9, where the resilient means is positioned in the fluid flow channel intermediate a hydraulic pump in the injection moulding apparatus and a source of hydraulic fluid.

11. A method according to claim 9 or 10, further comprising the step of providing a cushion on an opposite side of said resilient means from the hydraulic fluid, the cushion typically comprising a gas, a liquid or a foam.

12. A method for damping vibrations in an injection moulding apparatus having a hydraulic fluid supply engine, a hydraulic fluid line, and a source of hydraulic fluid, comprising the steps of:
providing a fitting having an angle therein for connecting the hydraulic fluid supply engine to the hydraulic fluid line leading from the hydraulic fluid source; and
providing a resilient member (such as a diaphragm, or a spring-mounted plate) disposed inside said fitting and oriented to substantially dissipate the vibration energy propagating from said hydraulic fluid supply engine, said resilient means being disposed outside of a fluid flow path through said angle.

13. A method according to claim 13, where said fitting comprises a T-shaped fitting with the resilient member being disposed opposite the hydraulic fluid supply engine, and/or wherein said method further comprises the steps of:
providing an end cap disposed over the end of the fitting having the resilient means; and
providing a fluid cushion between the resilient member and the end cap (the cushion typically comprising a gas, a liquid or a foam).

14. A hydraulic injection moulding apparatus exhibiting a decreased level of vibration and noise, comprising:
a fluid pump that produces vibrational energy;
a hydraulic line connected to the fluid pump that propagates the vibrational energy;
a T-shaped fitting coupling the line to a source of hydraulic fluid;
a resilient vibration damping device disposed in said fitting outside a path of fluid flow from the line to the pump so as not to impede fluid flow, said vibration damping device being oriented in a direction substantially orthogonal to the path of fluid flow, such that movement of the vibration damping device dissipates the vibration energy.
